(19) Europäisches Patentamt / European Patent Office / Office européen des brevets

(11) **EP 4 462 768 B1**

(12) **EUROPEAN PATENT SPECIFICATION**

(45) Date of publication and mention
of the grant of the patent:
**22.07.2026  Bulletin 2026/30**

(21) Application number: **22920719.6**

(22) Date of filing: **17.01.2022**

(51) International Patent Classification (IPC):
*H04N 5/913* ^(2006.01)   *H04N 5/77* ^(2006.01)
*H04N 23/00* ^(2023.01)   *H04N 21/222* ^(2011.01)
*H04N 21/274* ^(2011.01)   *H04N 21/2347* ^(2011.01)
*G06F 21/60* ^(2013.01)   *G06F 21/62* ^(2013.01)
*G06N 3/04* ^(2023.01)   *G06N 3/0464* ^(2023.01)
*G06N 3/08* ^(2023.01)   *H04N 21/426* ^(2011.01)
*H04N 21/4405* ^(2011.01)   *H04N 23/55* ^(2023.01)
*H04N 23/95* ^(2023.01)

(52) Cooperative Patent Classification (CPC):
G06F 21/602; G06F 21/6245; G06N 3/04;
G06N 3/0464; G06N 3/08; H04N 21/2347;
H04N 21/42623; H04N 21/4405; H04N 23/55;
H04N 23/95

(86) International application number:
**PCT/KR2022/000836**

(87) International publication number:
**WO 2023/136386 (20.07.2023 Gazette 2023/29)**

(54) **ELECTRONIC DEVICE THAT ENCRYPTS IMAGE**

ELEKTRONISCHE VORRICHTUNG ZUR VERSCHLÜSSELUNG EINES BILDES

DISPOSITIF ÉLECTRONIQUE QUI CHIFFRE UNE IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.11.2024  Bulletin 2024/46**

(73) Proprietor: LG Electronics Inc.
**Yeongdeungpo-gu
Seoul 07336 (KR)**

(72) Inventors:
• **HONG, Samnyol**
Seoul 06772 (KR)
• **JEON, Byeongmoon**
Seoul 06772 (KR)
• **PARK, Taewoong**
Seoul 06772 (KR)
• **LEE, Seunggyu**
Seoul 06772 (KR)

(74) Representative: **Vossius & Partner
Patentanwälte Rechtsanwälte mbB
Siebertstrasse 3
81675 München (DE)**

(56) References cited:
CN-A- 111 738 897    CN-A- 113 704 774
JP-A- 2021 052 284    KR-A- 20190 011 180
KR-B1- 101 760 092    US-A1- 2021 203 886

• EVTIKHIEV N N ET AL: "Application of a Digital
Micromirror Device for Optical Encryption with
Time Integration", OPTOELECTRONICS,
INSTRUMENTATION AND DATA PROCESSING,
vol. 56, no. 2, 16 December 2020 (2020-12-16),
pages 134 - 139, XP037317088, ISSN: 8756-6990,
DOI: 10.3103/S8756699020020053

- ABDURRAHMAN HAZER ET AL: "A review of single and multiple optical image encryption techniques", JOURNAL OF OPTICS, INSTITUTE OF PHYSICS PUBLISHING, BRISTOL GB, vol. 23, no. 11, 13 October 2021 (2021-10-13), pages 113501, XP020370412, ISSN: 2040-8986, [retrieved on 20211013], DOI: 10.1088/2040-8986/AC2463
- CHEREMKHIN PAVEL A ET AL: "Optical encryption of digital data in form of quick response code using spatially incoherent illumination", PROCEEDINGS OF SPIE; [PROCEEDINGS OF SPIE ISSN 0277-786X VOLUME 10524], SPIE, US, vol. 10176, 9 November 2016 (2016-11-09), pages 1017619 - 1017619, XP060087174, ISBN: 978-1-5106-1533-5, DOI: 10.1117/12.2268147

## Description

## Technical Field

The present disclosure relates to a method of encrypting an image. More particularly, the present disclosure relates to a method of encrypting an image in an unidentifiable manner and an electronic device that performs the method.

## Background Art

The amendments to the data-related laws, which are now in force in the Republic of Korea, require that personal information be made unidentifiable to protect personal information while still allowing data to be utilized. These amendments aim to promote the utilization of data as a critical resource in the fourth industry revolution. Specifically, the amendments to the three data-related laws, such as the Personal Information Protection Law, have been in force since August 2020 in the Republic of Korea. These amendments aim to promote the use of data as a critical resource in the fourth industry revolution, particularly in the fields of artificial intelligence, cloud computing, and IoT.

The essential provisions of the amendments to the three data-related laws, such as the Personal Information Protection Law, stipulate that the utilization of information be permitted without the owner's consent when personal information is made unidentifiable. These essential provisions aim to protect the personal information while utilizing data. Standards for making personal information unidentifiable have also been established in the U.S.A and the EU, and the corresponding personal information protection laws are currently enforced.

Regarding a method of rendering this personal information as unidentifiable information, a reception electronic device that receives an image may acquire an original image and then may encrypt the original image using software. However, when the reception electronic device performs encryption, there arises a problem in that personal information contained in the original image remains vulnerable to hacking risks at the terminal level.

Data associated with personal information may also be utilized as meaningful big data through a deep learning model in a shared environment. In association with this, there arises a problem in that the risk of privacy data leakage is present while data associated with personal information is processed for training through the deep learning model in the shared environment.

In association with this, when always exposed to a camera, customers (users) feel psychologically uncomfortable and protect their privacy by actions like covering a camera lens with a mechanical cover. However, these actions may cause a problem of inconvenience. In addition, a problem arises because a lens of a camera that is always capturing images is difficult to cover with the mechanical cover.

In addition, with advancements in the fourth industry revolution, there arises a problem that more images containing personal information, which are captured without the person's awareness, may be increasingly utilized as Big Data. In addition, the technology according to the present disclosure is important because companies with technologies that render these images unidentifiable may be competitive. Furthermore, there is a demand for technologies that can prevent the increasingly frequent hacking of IoT devices.
Evtikhiev, Nikolay N. et al. "Application of a Digital Micromirror Device for Optical Encryption with Time Integration" Optoelectronics, Instrumentation and Data Processing 56 (2020): pp. 134 - 139; Hazer, Abdurrahman and Remzi Yildirim. "A review of single and multiple optical image encryption techniques" Journal of Optics 23 (2021); US 2021/203886 A1 and Cheremkhin, Pavel A. et al. "Optical encryption of digital data in form of quick response code using spatially incoherent illumination" Proc. SPIE 10176, Asia-Pacific Conference on Fundamental Problems of Opto- and Microelectronics, 1017619 (2016) represent the related art.

## Disclosure of Invention

## Technical Problem

The invention is specified by the independent claims. Preferred embodiments are defined in the dependent claims. In the following description, although numerous features may be designated as optional, it is nevertheless acknowledged that all features comprised in the independent claims are not to be read as optional. Objects of the present disclosure are to address the above-mentioned problems and other problems. More specifically, one object of the present disclosure is to provide a method of encrypting an image in an unidentifiable manner and an electronic device and an image transmission and reception system that are capable of performing the method.

Another object of the present disclosure is to prevent an original image containing personal information from being hacked at the terminal level.

A further object of the present disclosure is to prevent the risk of privacy data leakage while data associated with personal information is processed for training through a deep learning model in a shared environment.

Still another object of the present disclosure is to prevent the hacking of an IoT device by rendering images unidentifiable.

Yet another object of the present disclosure is to render images captured by an IoT camera, such as a smart home camera, unidentifiable when the images are hacked and utilized as Big Data, such as artificial intelligence training data.

## Solution to Problem

In order to accomplish the above-mentioned objects and other objects, according to the present disclosure, there is provided an electronic device that encrypts image information, the electronic device including a camera module configured to capture an image. The camera module includes an optical element inside the camera module. The optical element is designed to capture the image as an encrypted image. The electronic device may perform a decryption process that uses an encryption key.

In order to accomplish the above-mentioned objects and other objects, according to one aspect of the present disclosure, there is provided an electronic device that encrypts image information, the electronic device including: a camera module configured to capture an image and including an optical element inside the camera module, the optical element being designed to capture the image as an encrypted image; and a display operatively coupled to the camera module and configured to decrypt the encrypted image and display a decrypted image.

In the electronic device, the camera module may be configured to include a plurality of lenses, and the optical element may be arranged, together with the plurality of lenses and may be configured to encrypt the captured image in such a manner that the captured image is unidentifiable. The electronic device may further include a processor configured to process the encrypted image. In the electronic device, the processor may decode the image encrypted in an unidentifiable manner by the optical element to a normal image or additionally may encrypt the encrypted image once more using software.

In the electronic device, the processor may control the encrypted image to be stored in a cloud server. In the electronic device, the processor may access the cloud server and, only when necessary for video chatting or the like, and may control the encrypted image to be restored to the normal image. Therefore, the risk of privacy data leakage can be prevented while data associated with personal information is processed for training through a deep learning model in a shared environment.

According to an embodiment of the present disclosure, in a lens design step, a first parameter for a specific function, for example, a point spread function (PSF) may be determined in such a manner that the normal image is encrypted to a threshold level or higher at a defocused position relative to the focal point of the pre-encryption normal image. In the lens design step, convolution computation may be performed on the normal image on the basis of the determined first parameter and thus may simulate the encrypted image (may reproduce the encrypted image by virtually simulating actual situation before the lens is manufactured). This simulation provides a basis for subsequently restoring the encrypted image (performing decryption) using software.

According to the embodiment, in the lens design step, an image encrypted in a spatial domain may be simulated through the convolution computation. In the lens design step, a specific function, for example, a parameter associated with a modulation transfer function (MTF) may be computed by Fourier-transforming the encrypted image. The extent to which the image is encrypted may be determined on the basis of the computed parameter. When the extent to which the image is encrypted reaches a threshold level, the lens design may be finalized on the basis of the parameter associated with the MTF and the encrypted image. Subsequently, the lens may actually be manufactured.

According to the embodiment, when the extent to which the image is encrypted does not reach the threshold level, an optical structure may be adjusted by modifying the design of the optical element and the plurality of lenses. In the adjusted optical structure, a second parameter for a specific function may be determined in such a manner that a second normal image is encrypted to a threshold level or higher at a defocused position relative to the focal point of a pre-encryption second normal image. At this point, the specific function may be the point spread function (PSF), but is not limited thereto.

According to the embodiment, in the lens design step, a second image encrypted in the spatial domain may be simulated through the convolution computation. The second parameter associated with the modulation transfer function (MTF) may be computed by Fourier-transforming the encrypted second image. The extent to which the second image is encrypted may be determined on the basis of the computed second parameter. When the extent to which the second image is encrypted reaches a threshold level, the lens design may be finalized on the basis of the second parameter associated with the MTF and the encrypted second image. Subsequently, the lens may actually be manufactured.

According to another aspect of the present disclosure, there is provided an electronic device that decrypts image information, the electronic device including: a processor configured to restore an image, captured in a way that is encrypted in an identifiable manner, to a normal image on the basis of the encryption key: and a display unit displaying the normal image resulting from the restoration.

According to a further aspect of the present disclosure, there is provided an electronic device that restores image information, the electronic device including: a communication unit configured to receive an image, captured in a way that is encrypted in an unidentifiable manner, from a transmission device; a processor operatively coupled to the communication unit and configured to restore the encrypted image to a normal image on the basis of the encryption key; and a display unit displaying the normal image resulting from the restoration.

In the electronic device, the processor may be configured to restore the encrypted image to the normal image using a combination of a decryption module and a deep learning network and then to perform an AI function on the normal image.

In the electronic device, the processor may Fourier-transform the encrypted image and a PSF in order to perform deconvolution computation for decryption on the basis of the encryption key, may perform computation to divide the encrypted image by the PSF in a frequency domain, and then may obtain the normal image by performing inverse Fourier transform on the result of the division.

In the electronic device, the processor may restore the encrypted image to the normal image by performing the deconvolution computation. In the electronic device, the processor may control the normal image resulting from the restoration to be displayed on a screen of the display.

In the electronic device, the processor may restore the encrypted image to the normal image using the combination of the decryption module and the deep learning network, and then may perform the AI function on the normal image.

In the electronic device, the processor may improve an AI recognition rate of the normal image, resulting from the restoration on the basis of the encryption key, much more than an AI recognition of an image, resulting from restoration through a first deep learning network.

In the electronic device, when the electronic device is authenticated on the basis of an identifier of the electronic device, the processor may restore the encrypted image through the deep learning network in such a manner that a person within the encrypted image is identifiable, may enable the image resulting from the restoration to be displayed on the screen of the display, and may perform an AI function, which is associated with classification of a person within the normal image resulting from the restoration, facial recognition, and situational recognition.

In the electronic device, when the electronic device is authenticated on the basis of an identifier of the electronic device, through the deep learning network, the processor may perform an AI function, which is associated with classification of a person within an image, facial recognition, and situational recognition, on the normal image resulting from the restoration on the basis of the encryption basis and, when necessary, may display the normal image on a screen of the display.

According to still another aspect of the present disclosure, there is provided an electronic device that transmits image information, the electronic device including: a camera module configured to capture an image and including an optical element inside the camera module, the optical element being designed to capture the image as an encrypted image; and a processor operatively coupled to the camera module and controlling the encrypted image to be restored, wherein in a state of being connected to another authenticated electronic device, the processor is configured to restore the image encrypted in an unidentifiable manner to a normal image on the basis of an encryption key and to transmit the normal image resulting from the restoration to the other authenticated electronic device.

In the electronic device, the processor may restore the encrypted image to the normal image using a combination of an encryption key and a deep learning network and may perform an AI function on the normal image.

In the electronic device, the processor may restore the encrypted image to a second image that has an improved recognition rate, within the processor through the decryption module, and then, the second image resulting from the restoration, may be configured using the second deep learning network in order to realize classification of a person within an image, facial recognition, and situational recognition using AI.

## Advantageous Effects of Invention

A method, according to the present disclosure, of encrypting an image in an identifiable manner, and an electronic device and an image transmission and reception system that perform the method are described as follows.

According to the present disclosure, there may be provided an electronic device and an image transmission and reception system that transmit or receive an image encrypted in a camera.

According to the present disclosure, an original image containing personal information can be prevented from being hacked at the terminal level.

According to the present disclosure, the risk of privacy data leakage can be prevented while data associated with personal information is processed for training through a deep learning model in a shared environment.

According to the present disclosure, the hacking of an IoT device can be prevented by rendering images unidentifiable.

According to the present disclosure, an image captured by an IoT camera, such as a smart home camera, can be changed in a manner that cannot be identified when hacked or utilized as Big Data for AI learning data.

According to the present disclosure, an image that is optically processed in an unidentifiable manner at the camera level can be output, thereby fundamentally protecting privacy.

According to the present disclosure, not only the risks, such as hacking, but also the causes of breaches of sensitive privacy, which may occur during a data transmission process or a storage process, can be fundamentally eliminated by performing a subsequent deep learning process using optical encryption and an encrypted image.

According to the present disclosure, because a mathematical encryption key for an optically encrypted image is provided, it is also possible that the optically encrypted image is output as an original image, resulting from decryption, in a reception device when necessary.

Further scope of applicability of the present disclosure will become apparent from the following detailed description. It should be understood, however, that the detailed description and specific examples, such as the preferred embodiment of the invention, are given by way of illustration only, since various changes and modifications within the idea and scope of the invention will be apparent to those skilled in the art.

## Brief Description of Drawings

FIG. 1 is a block diagram that is referenced to describe an electronic device according to the present disclosure.

FIG. 2 is a conceptual diagram illustrating an image transmission and reception system that includes electronic devices according to the present disclosure, which transmit or receive an encryptedly captured image.

FIG. 3 is a diagram illustrating a configuration of the transmission and reception system in FIG. 2.

FIG. 4 is a diagram illustrating a camera module of the electronic device according to the present disclosure, which includes an optical element, and a configuration for outputting an encrypted image through the camera module.

FIG. 5 is a flowchart illustrating a method, according to the present disclosure, of encrypting an image.

FIG. 6 is a flowchart illustrating a method of decrypting an image captured in the electronic device, according to the present disclosure, of the image transmission and reception system.

FIG. 7 is a photograph showing an example of a PSF pattern associated with optical encryption according to the present disclosure.

FIG. 8 is a photograph showing an example of a PSF pattern that results from defocusing a normal camera.

FIGS. 9A and 9B are graphs showing an example of a modulation function for a configuration of a general camera and an example of a modulation function for a configuration to which image encryption according to the present disclosure applies, respectively.

FIG. 10 is a conceptual diagram illustrating PSF-based image encryption and decryption processes.

FIG. 11 is a conceptual diagram illustrating optical encryption and decryption methods according to the present disclosure that apply to an image that does not include a person, in addition to an image that includes a person.

FIG. 12 is a diagram illustrating a system according to the present disclosure, which includes a deep learning network configured to make the encrypted image identifiable.

## Mode for the Invention

Description will now be given in detail according to one or more embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the claimed subject-matter of the present disclosure, such explanation has been omitted but would be understood by those skilled in the art. The accompanying drawings are used to help easily understand the technical idea of the present disclosure and it should be understood that the idea of the present disclosure is not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms "include" or "has" used herein should be understood that they are intended to indicate the existence of a feature, a number, a step, an element, a component or a combination thereof disclosed in the specification, and it may also be understood that the existence or additional possibility of one or more other features, numbers, steps, elements, components or combinations thereof are not excluded in advance.

Electronic devices presented herein may be implemented using a variety of different types of terminals. Examples of such devices include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, digital signages, robots, and the like.

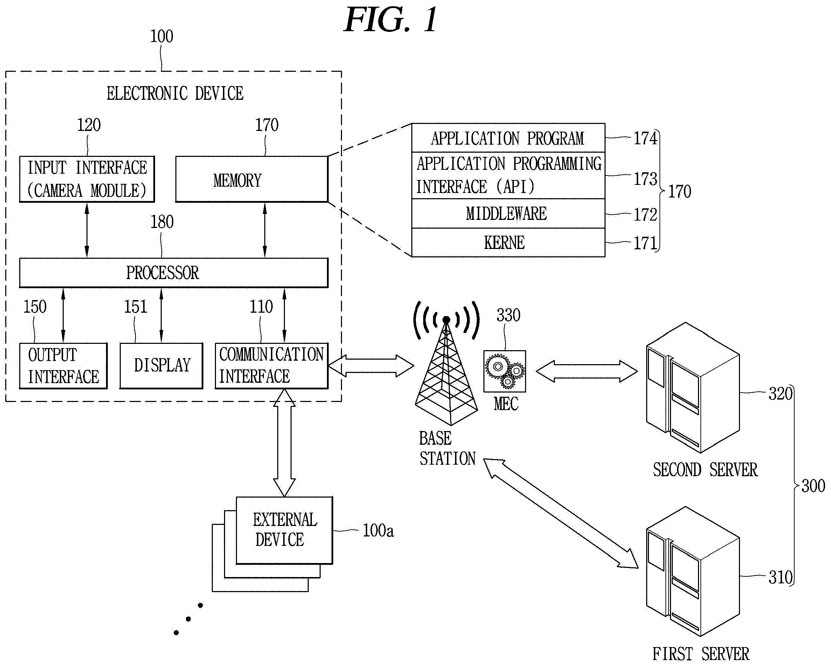

With regard to this, FIG. 1 is a block diagram of an electronic device in accordance with the present disclosure. Referring to FIG. 1, the electronic device 100 may include a communication interface 110, an input interface (or an input device) 120, an output interface (or an output device) 150, and a processor 180. Here, the communication interface 110 may refer to a communication module 110. The input interface (or input device) 120 may include a camera module, and may further include other components in addition to the camera module. The electronic device 100 may further include a display 151 and a memory 170. It is understood that implementing all of the illustrated components illustrated in FIG. 1 is not a requirement, and that greater or fewer components may alternatively be implemented.

In more detail, among others, the communication module 110 may typically include one or more modules which permit communications such as communications between the electronic device 100 and a communication system, communications between the electronic device 100 and another electronic device, or communications between the electronic device 100 and an external server. Further, the communication module 110 may typically include one or more modules which connect the electronic device 100 to one or more networks. Here, the one or more networks may be, for example, a 4G communication network and a 5G communication network.

The output unit 150 may be configured to generate visual, audible, or tactile-related output. The output interface 150 may include a display 151.

The memory 170 stores data to support various functions or features of the electronic device 100. For instance, the memory 170 may be configured to store application programs executed in the electronic device 100, data or instructions for operations of the electronic device 100, and the like. At least some of these application programs may be downloaded from an external server (e.g., a first server 310 or a second server 320).

The first server 310 may be referred to as an authentication server, and the second server 320 may be referred to as a content server, but are not limited thereto.. Meanwhile, a part of the second server 320 corresponding to the content server may be implemented as a mobile edge cloud (MEC) 330 in units of base stations. This can implement a distributed network through the second server 320 implemented as the mobile edge cloud (MEC) 330, and shorten content transmission delay.

The memory 170 may store commands or data related to at least one of other components of the electronic device 100. According to one embodiment, the memory 170 may store software and/or a program. For example, the program may include a kernel 171, middleware 172, an application programming interface (API) 173, an application program (or "application") 174, or the like. At least some of the kernel 171, the middleware 172, and the API 174 may be referred to as an operating system (OS).

The kernel 171 may control or manage system resources (e.g., the bus, the memory 170, or the processor 180) that are used for executing operations or functions implemented in other programs (e.g., the middleware 172, the API 173, or the application program 174). In addition, the kernel 171 may provide an interface to control or manage system resources by accessing individual components of the electronic device 100 in the middleware 172, the API 173, or the application program 174.

The middleware 172 may play an intermediary so that the API 173 or the application program 174 communicates with the kernel 171 to exchange data. Also, the middleware 172 may process one or more task requests received from the application program 174 according to priorities. In one embodiment, the middleware 172 may give at least one of the application programs 174 a priority to use the system resources (e.g., the bus, the memory 170, or the processor 180) of the electronic device 100, and process one or more task requests. The API 173 is an interface for the application program 174 to control functions provided by the kernel 171 or the middleware 1723, and for example, may include at least one interface or function (e.g., command) for file control, window control, image processing, or text control.

The processor 180 may typically function to control an overall operation of the electronic device 100, in addition to the operations associated with the application programs. The processor 180 may provide or process information or functions appropriate for a user by processing signals, data, information, and the like, which are input or output by the aforementioned various components, or activating application programs stored in the memory 170. Also, the controller 180 may control at least some of the components of the electronic device 100,to execute an application program that is stored in the memory 170. In addition, the processor 180 may control a combination of at least two of those components included in the electronic device 100 to activate the application program.

The processor 180 may include one or more of a central processing unit (CPU), an application processor (AP), an image signal processor (ISP), a communication processor (CP), and a low power processor (e.g., sensor hub). For example, the processor 180 may execute a control of at least one of other components of the electronic device 100 and/or an operation or data processing related to communication.

At least some of the components may cooperably operate to implement an operation, a control or a control method of an electronic device according to various embodiments disclosed herein. Also, the operation, the control or the control method of the electronic device may be implemented on the electronic device by an activation of at least one application program stored in the memory 170.

Referring to FIG. 1, a communication system may include an electronic device 100, at least one external device 100a, a first server 310, and a second server 320. The electronic device 100 may be functionally connected to at least one external device 100a, and may control contents or functions of the electronic device 100 based on information received from the at least one external device 100a. According to an embodiment, the electronic device 100 may use the servers 310 and 320 to perform authentication for determining whether the at least one external device 100 includes or generates information conforming to a predetermined rule. Also, the electronic device 100 may display contents or control functions by controlling the electronic device 100 based on an authentication result. According to an embodiment, the electronic device 100 may be connected to at least one external device 100a through a wired or wireless communication interface to receive or transmit information.

An electronic device according to the present disclosure, which encrypts or decrypts an image, and an image transmission and reception system that includes the electronic device are described. In association with this, with reference to FIG. 1, the electronic device 100 operates as a transmission device that transmits an image, which is encryptedly captured through a camera module, and operates as a reception device that receives and decodes the encrypted captured image. At least one of the first and second servers 310 and 320 may operate as a cloud server configured to store the encryptedly captured image.

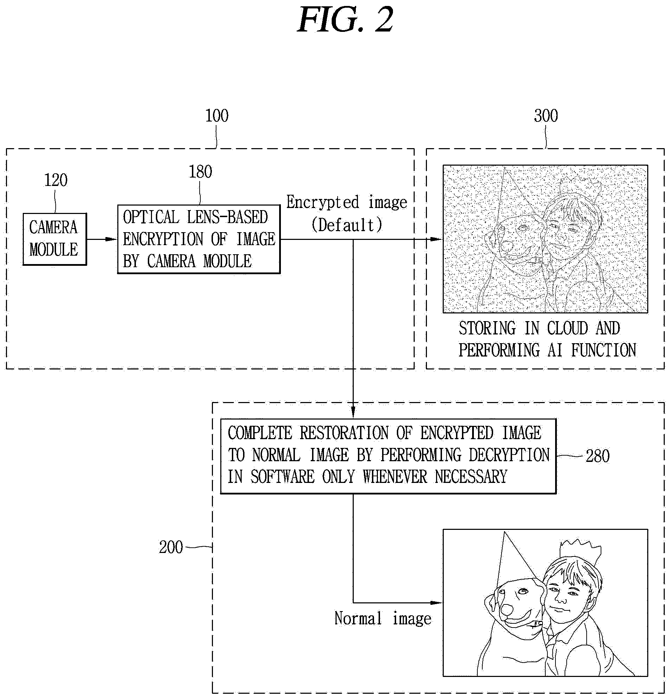

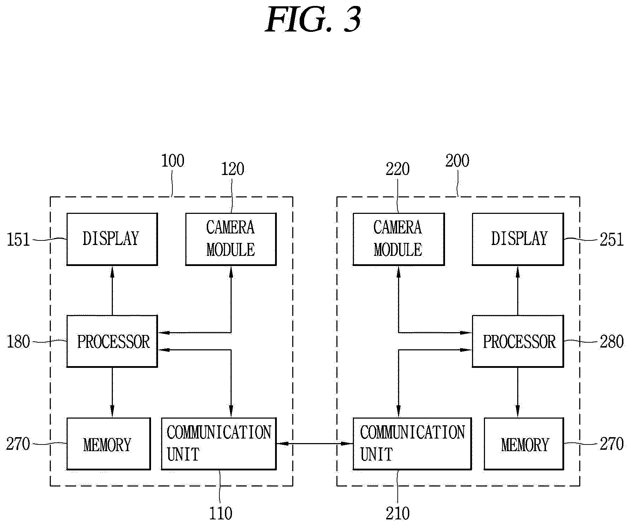

The electronic device according to the present disclosure, which transmits or receives the encryptedly captured image, and the image transmission and reception system that includes the electronic device are described below. In association with this, FIG. 2 is a conceptual diagram illustrating the image transmission and reception system that includes electronic devices according to the present disclosure, which transmit or receive the encryptedly captured image. FIG. 3 is a diagram illustrating a configuration of the transmission and reception system in FIG. 2.

With reference to FIGS. 2 and 3, the electronic device 100 that transmits the encryptedly captured image may be configured in a manner that is enabled to communicate with a second electronic device 200 that is another electronic device. The electronic device 100 may store an encrypted image in a cloud server 300 that corresponds to an internal memory 170 or an external memory. The cloud server 300 may identify and specify persons based on artificial intelligence (AI), using encrypted images received from a plurality of electronic devices, and may derive the results of the analysis.

Therefore, the cloud server 300 may be configured to store the encrypted images and analyze these encrypted images based on AI.

In association with a method, according to the present disclosure, of transmitting an encrypted image and restoring the encrypted image, the privacy protection measures for images captured from cameras, which have been researched, developed, and utilized, are described as follows. In almost most existing techniques, a captured image is transmitted, and a server encrypts the captured image and transmits the encrypted image to a reception device.

However, in these techniques, encryption is performed after the server or the reception device acquires an original image. Because of this, a problem arises in that privacy is not protected in a case where hacking occurs at the terminal level or where a server is hacked.

Therefore, in order to fundamentally protect the privacy of an image captured by a camera, according to the present disclosure, an encrypted image may be enabled to be output by adopting an optical encryption technique. In order to implement this feature, according to the present disclosure, a novel optical component (optical element) corresponding to an encryption key is inserted into a lens of an existing camera, thereby obscuring an image and rendering it unidentifiable.

The core of this technology is to additionally design a suitable optical element into a camera, and the designed optical element creates a defocused optical transfer function. This approach enables the acquisition of an unidentifiable image. In a camera system configured in this manner, an image can be restored using a software algorithm that mathematically understands the characteristics of the inserted optical element. Consequently, this camera system may be used like a normal 2D camera when video chatting, remote monitoring, or the like is necessary. The optical element corresponding to the encryption key may be configured as an aspherical lens or the like in such a manner as to function as a phase mask for an optical signal.

With reference to FIGS 1 to 3, the electronic device 100 may be configured to include a communication unit 110, a camera module 120 that corresponds to an input interface, a display 151, a memory 170, and a processor 180. The second electronic device 200, which receives an image transmitted from the electronic device 100, may be configured to include a communication unit 210, a display 251, a memory 270, and a processor 280. The second electronic device 200 that receives an image may also capture an image and transmit the captured image to the electronic device 100. Accordingly, the second electronic device 200 may also include a camera module.

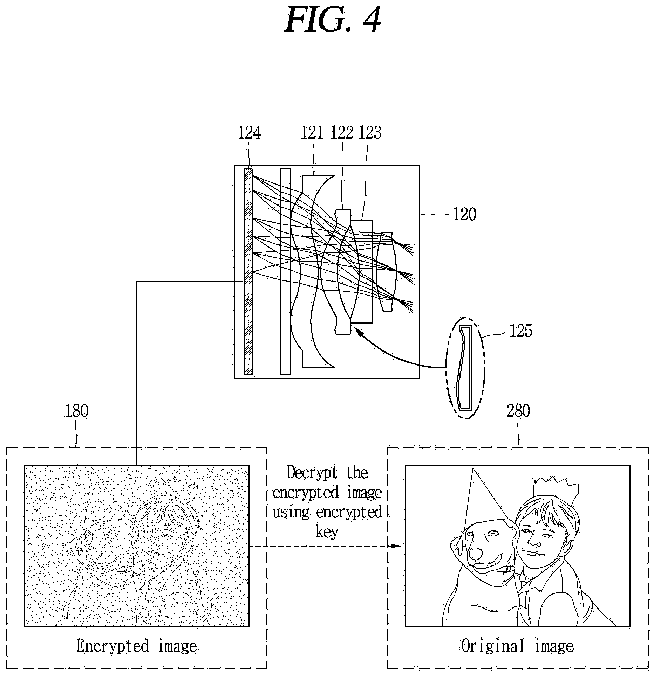

The camera module 120 may be configured to capture an image. The camera module 120 may include an optical element inside the camera module 120, the optical element being designed in such a manner as to capture an image as an encrypted image. The optical element, as illustrated in FIG. 4, may be configured as an optical lens that is arranged, together with a plurality of lenses. The display 151 may be operatively coupled to the camera module 120. The display 151 may be configured to display an encrypted image or a decrypted image. The display 151 may be configured to decrypt an encrypted image and display the decrypted image. The electronic device 100 may perform a decryption process that uses an encryption key.

To this end, the processor 180 may be operatively coupled to the camera module 120. The processor 180 may also be operatively coupled to the display 151 and the memory 170. The processor 180 may perform a function of decrypting an image encrypted based on an optical lens of the camera module 120. The processor 180 may control a captured image to be decrypted on the basis of the encryption key in a manner that is identifiable with the naked eye.

The processor 180 may perform the decryption process that uses the encryption key. The processor 180 may also be configured to transmit an encrypted image to the second electronic device 200 that is another electronic device. In association with this, the encryption key may be integrated into an application program that manages output to a display for a transmission unit or a reception unit, but is not limited to this integration. The encryption key may be upgraded within the application program and may also be received from another device. The processor 180 may also be configured to transmit an encrypted image to the cloud server 300.

Accordingly, even in a case where information about a specific person is included within a captured image, the information is encrypted in a manner that the specific person cannot be identified. Consequently, the protection of the privacy of the specific person is possible. Therefore, an image is provided that is encrypted in an unidentifiable manner. For this reason, the single electronic device 100, which includes the camera module 120, or the entire system that includes the second electronic device 200, which receives the encrypted image from the electronic device 100, may be referred to as a privacy camera system. At this point, encrypting an image in an unidentifiable manner may mean that the image is blurred and/or defocused to such an extent that a specific object within the image cannot be identified when viewed externally. However, the encrypting is limited to this blurring or defocusing. Therefore, encrypting an image in an unidentifiable manner may mean a technique in which an image is arbitrarily deformed to such an extent that a specific object within the image cannot be identified.

Only when necessary, the first electronic device 100 or the second electronic device 200 may decrypt an encrypted image using software and may restore the encrypted image to an original image as captured. The image resulting from the restoration is a pre-encrypted image, and information about a specific person within the image resulting from the restoration can be identified. For this reason, the image resulting from the restoration may also be referred to as a normal image.

The privacy camera system according to the present disclosure may be utilized for video meetings, remote monitoring, and the like and may operate in webcam mode. Only when necessary, the first electronic device 100 or the second electronic device 200 decrypts an encrypted image on the basis of the encryption key, using software. Accordingly, the first electronic device 100 or the second electronic device 200 may restore the encrypted image to an original image as captured, on the basis of the encryption key and may hold video meetings and perform remote monitoring.

In association with this, if the second electronic device 200 and the cloud server 300 already have the encryption key, only the encrypted image may be transmitted to the second electronic device 200 and the cloud server 300, without the encryption key. In a case where an encryption key for a new image is updated, the updated encryption key may be transmitted to the second electronic device 200 or the cloud server 300.

The camera within the electronic device of the image transmission and reception system according to the present disclosure may include an optical element that changes a captured image in an unidentifiable manner. In association with this, FIG. 4 is a diagram illustrating the camera module of the electronic device according to the present disclosure, which includes the optical element, and a configuration for outputting an encrypted image through the camera module.

With reference to FIG. 4, the camera module 120 may be configured to include a plurality of lenses 121 to 123. The number of the plurality of lenses is not limited to the configuration in the configuration in FIG. 4, and the plurality of lenses may be configured in combinations of convex lenses and/or concave lenses, depending upon the application. The camera module 120 may further include an optical element 125 that is arranged, together with a plurality of lenses, and is configured to encrypt a captured image in an unidentifiable manner. In association with this, the optical element 125 may be configured as an optical lens that is arranged, together with the plurality of lenses 121 to 123. In addition, through optical design, the optical lens for encryption may also be configured with only the plurality of lenses 121 to 123, thereby eliminating the need for the separate optical element 125.

The camera module 120 may further include an image sensor 124 that is configured to sense an analog signal acquired through the optical element 125 and the plurality of lenses 121 to 123 and to convert the acquired analog signal into a digital signal.

A double-step encryption process may be performed. In the double-step encryption process, an image is encrypted through the optical element 125, and in addition, encryption is once more performed on the encrypted image using software. In association with this, the processor 180 may once more encrypt the image encrypted in an unidentifiable manner by the optical element 125, using software. In addition, the processor 180 may once more encrypt the encrypted image using software. The processor 180 may decrypt the image encrypted in an unidentifiable manner by the optical element 125 and may also display the decrypted image.

The present disclosure relates to a method in which an image captured by a camera module is controlled to be encrypted on the basis of the encryption key in a manner that is unidentifiable with the naked eye and is utilized in the electronic device including the camera module, or in which the encrypted image is transmitted to another electronic device.

According to the present disclosure, the captured image may be controlled to be encrypted in an unidentifiable manner, on the basis of the encryption key included in a camera optical system. In association with this, decryption is performed using software only when a normal image is necessary, such as for video chatting or remote monitoring. Data from the captured images may be utilized as Big Data for AI learning or may be employed for the purpose of performing specific AI functions such as face recognition and behavior pattern recognition. In addition, in the case of transmission to or storage in the cloud, restoration to a normal image is not performed, and an image, captured by a camera in a way that is encrypted in an unidentifiable manner, may be utilized as it is. Accordingly, a method, according to the present disclosure, of encrypting an image primarily features the fundamental protection of privacy.

Configuring an encryption key on the basis of a point spread function (PSF) and a modulation transfer function (MTF), which are changed by the optical element 125, and performing encryption based on associated parameters are the primary features. In addition, a method of performing decryption on the basis of an encryption key using software is the primary feature.

As described above, the method, according to the present disclosure, of encrypting an image may be performed using software or hardware. In association with this use of hardware, an image captured by an optical system including the optical element 125 is deformed (encrypted) in hardware. In association with this, with reference to FIGS. 1 to 4, the processor 180 may perform decryption on the basis of the extent to which the image is changed by the optical element. In addition, the processor 180 may control the communication unit 110 in such a manner as to transmit the encrypted image and the encryption key to the second electronic device 200 that is another electronic device.

The processor 180 may also control the encrypted image to be stored in the cloud server 300. The processor 180 may access the cloud server 300 and may control the encrypted image to be restored to a normal image. The processor 180 may control the encrypted image to be restored to a normal image on the basis of the encryption key. In addition, the processor 280 may control an image, which is captured in a way that is encrypted in an unidentifiable manner, to be restored to a normal image, that is, an original image on the basis of the encryption key. The display 251 may be configured to display the normal image resulting from the restoration.

In a case where the image deformed (encrypted) in hardware by the optical element 125 is once more deformed (encrypted) in software, the encrypted image may be decrypted in software on the basis of the encryption key. In association with this, the processor 280 of the second electronic device that receives the encrypted image may restore the encrypted image to a normal image corresponding to an original image, on the basis of the encryption key.

Therefore, the primary technical features of the method, according to the present disclosure, of encrypting an image and the electronic device performing the method may be summarized as follows, but are not limited to the following summary.

Image data, which is acquired in a blurred (encrypted) manner by the camera according to the present disclosure, may be utilized as Big Data for AI learning. The image data, which is encrytedly acquired by the camera, may be utilized for the purpose of specific AI functions, such as face recognition, behavior pattern recognition. In addition, the primary technical feature of the electronic device is that blurred (encrypted) images are utilized as they are, without being decrypted, when transmitting to or storing in the cloud.

The image data, which is acquired in a blurred (encrypted) manner by the camera according to the present disclosure, may be output as a normal image, recognizable by a person, for video chatting, remote monitoring, or the like. In this case, the primary technical feature of the electronic device is that when a program (such as a chatting program or a remote monitoring program) is executed, the program automatically decrypts and outputs an image in real time using the encryption key.

Therefore, even though a terminal with the camera according to the present disclosure is hacked, leaked image data remains blurred (encrypted). Accordingly, the present disclosure has features designed to prevent any resultant damage from the privacy breaches of each personal image captured by the camera.

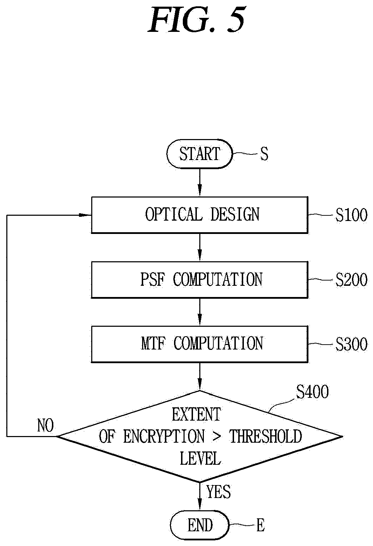

A design process of encrypting an image captured in the electronic device according to the present disclosure may be repeatedly performed by adjusting the extent to which an optical structure and a specific object within the image are spread and displayed. In association with this, FIG. 5 is a flowchart illustrating a design method of encrypting an image captured by the electronic device according to the present disclosure.

With reference to FIG. 5, the design method of encrypting a captured image may be configured to include an optical design process S100, a point spread function (PSF) computation process S200, a modulation transfer function (MTF) computation process S300, and an encryption extent determination process S400.

In the point spread function (PSF) computation process S200, parameters for a point spread function (PSF) is determined in such a manner that a normal image is encrypted to a threshold level or beyond in a manner that is unidentifiable with the naked eye. In association with this, the point spread function (PSF) computation process S200 may be repeatedly performed. Therefore, the parameters for the point spread function (PSF), which are updated through the point spread function (PSF) computation process S200, may be referred to as first, second, third and so forth up to N-th parameters, respectively.

Through convolution computation, an image encrypted in a spatial domain may be simulated. In association with this, Mathematical Equation 1 mathematically expresses an encryption algorithm and a restoration algorithm.

### [Mathematical Equation 1]

$$B = S*K \implies S = B/K$$

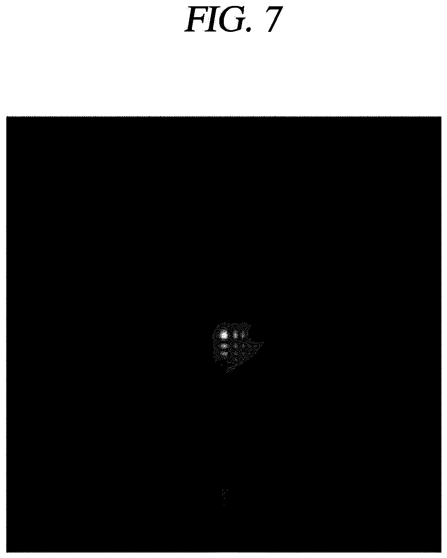

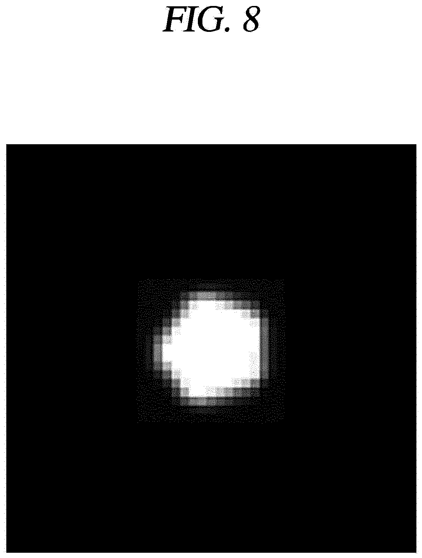

In Mathematical Equation 1, B depicts an encrypted image, and S is a pre-encryption normal image. K depicts a point spread function (PSF), '*' depicts a convolution operator, and '/' depicts a deconvolution operator. The point spread function (PSF) represents a characteristic of a camera lens output image for an ideal point source in the spatial domain. In association with this, FIGS. 7 and 8 are photographs showing an example of a PSF pattern associated with optical encryption according to the present disclosure and an example of a PSF pattern that results from defocusing a normal camera, respectively.

The modulation transfer function (MTF) may be acquired by Fourier-transforming the point spread function (PSF) into the frequency domain.

In the modulation transfer function (MTF) computation process S300, a parameter associated with the modulation transfer function (MTF) may be computed by performing the Fourier transform using a PSF parameter corresponding to the encryption key.

Subsequently, in the encryption extent determination process S400, it may be determined, on the basis of the parameter associated with the modulation transfer function (MTF), whether or not the extent of image encryption reaches a threshold level.

In contrast, when the extent of image encryption is determined not to reach the threshold level, the processes subsequent to the optical design process S100 may be repeated, but the method is not limited to this repetition.

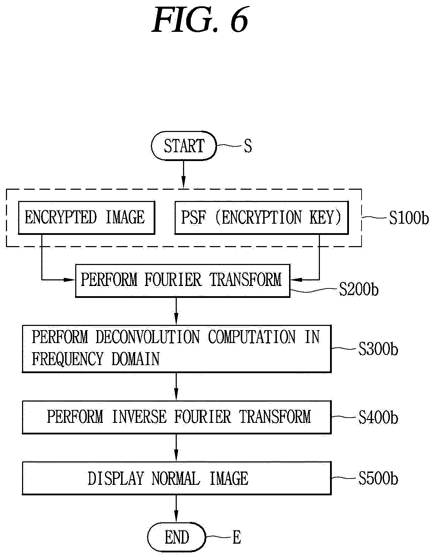

In the electronic device according to the present disclosure, a process of decrypting a captured image may be performed on the basis of the PSF parameter, which results from adjusting the extent to which the optical structure and the specific object within the image are spread, that is, on the basis of the encryption key. In association with this, FIG. 6 is a flowchart illustrating a method of decrypting an image captured in the electronic device according to the present disclosure.

With reference to FIG. 6, the method of decrypting the encrypted image may be configured to include an encrypted-image reception process S100b, a Fourier transform process S200b, a deconvolution process S300b, an inverse Fourier transform process S400b, and a normal image display process S500b.

With reference to FIGS 1 to 6, the method of decrypting the encrypted image may be performed in the second electronic device 200 that receives the encrypted image, as well as in the first electronic device. However, the method is not limited to this configuration, and an application in which the electronic device 100 and the second electronic device 200 perform bidirectional image transmission may be considered. Therefore, it may also be assumed that both the electronic device 100 and the second electronic device 200 encrypt and transmit an image and receive and decrypt the encrypted image.

In the encrypted-image reception process S100b, the encrypted image and the PSF parameter associated with the encrypted image, that is, the encryption key, may be received. In the Fourier transform process S200b, the image encrypted on the basis of the encryption key, that is, the PSF associated with the encrypted image may be Fourier-transformed. In the deconvolution process S300b, deconvolution computation may be performed on the encrypted image and the PSF that are Fourier-transformed into the frequency domain.

In the inverse Fourier transform process S400b, the inverse Fourier transform may be performed on an image, resulting from the restoration from the frequency domain through the deconvolution computation, thereby restoring the result of the inverse Fourier transform to a normal image in the spatial domain. In the normal image display process S500b, the normal image resulting from the restoration may be controlled to be displayed on a screen of the display.

Different applications of the PSF, which corresponds to the encryption key according to the present disclosure, are described as follows. In association with this, FIG. 7 is a photograph illustrating an example of the PSF pattern associated with the optical encryption according to the present disclosure. FIG. 8 is a photograph showing an example of a PSF pattern that results from defocusing a normal camera.

With reference to FIG. 7, a camera module may be configured to maintain a constant PSF pattern at a defocused position of a camera and within a field region, and, additionally, image encryption may be performed. Therefore, an optical system needs to be developed and verified in such a manner that the camera module maintains this constant PSF pattern.

With reference to FIG. 8, in a case where a normal camera is defocused, the dispersion of the PSF is extensive, sensitive, and does not have a constant pattern.

An objective of an existing optical structure design is to minimize optical aberration. In contrast, according to the present disclosure, an optical structure design differs from the existing optical structure design in that it makes the optical aberration constant to ensure the image encryption.

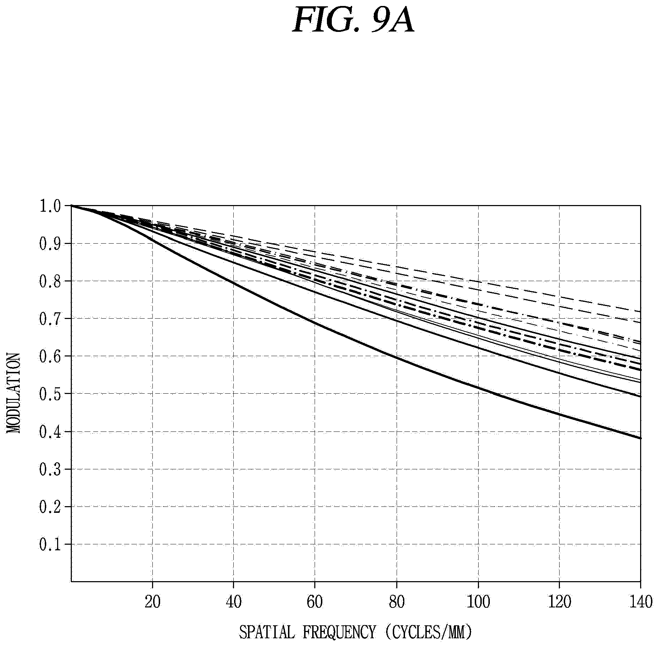

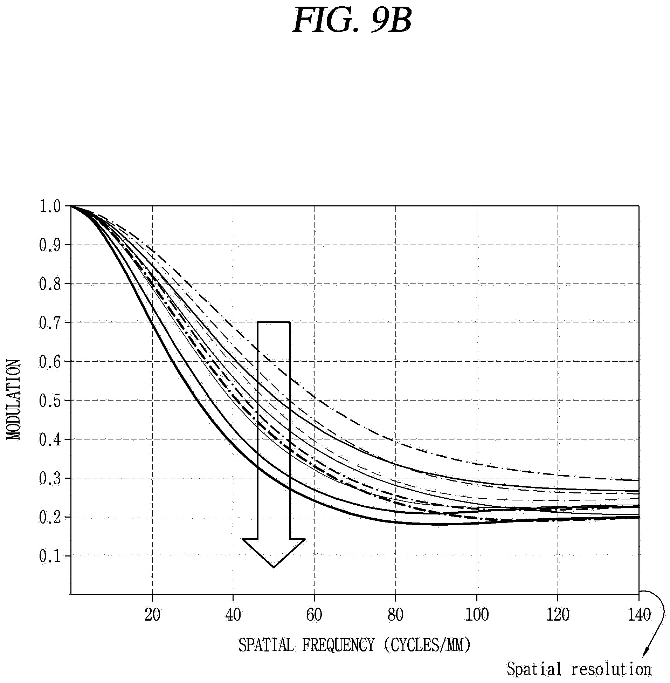

When Fourier-transforming the PSF corresponding to the encryption key according to the present disclosure, the modulation transfer function (MTF) may be acquired, and the extent of image encryption, that is, the extent of non-identification, may also be designed based on the MTF. In association with this, FIGS. 9A and 9B are graphs showing an example of a modulation function for a configuration of a general camera and an example of a modulation function for a configuration to which image encryption according to the present disclosure applies, respectively.

The modulation transfer function (MTF) refers to a performance index that represents the performance of a camera or a lens. The MTF corresponds to a performance index that assigns the ability (contrast) to reproduce fine details of a subject, that is, a resolution response.

From FIG. 9B, it can be seen that the configuration to which the image encryption according to the present disclosure applies has a lower ability (contrast) to produce fine details of a subject than the configuration of a general camera in FIG. 9A. The extent of encryption (the extent of non-identifiability) may be designed by adjusting this level of the ability. Therefore, the image encryption based on the MTF parameter, as shown in FIG. 9B, may be performed when the extent of non-identifiability of an image is tuned from the optical design phase onward. In association with this, the MTF parameter may be a spatial frequency associated with spatial resolution, but is not limited thereto.

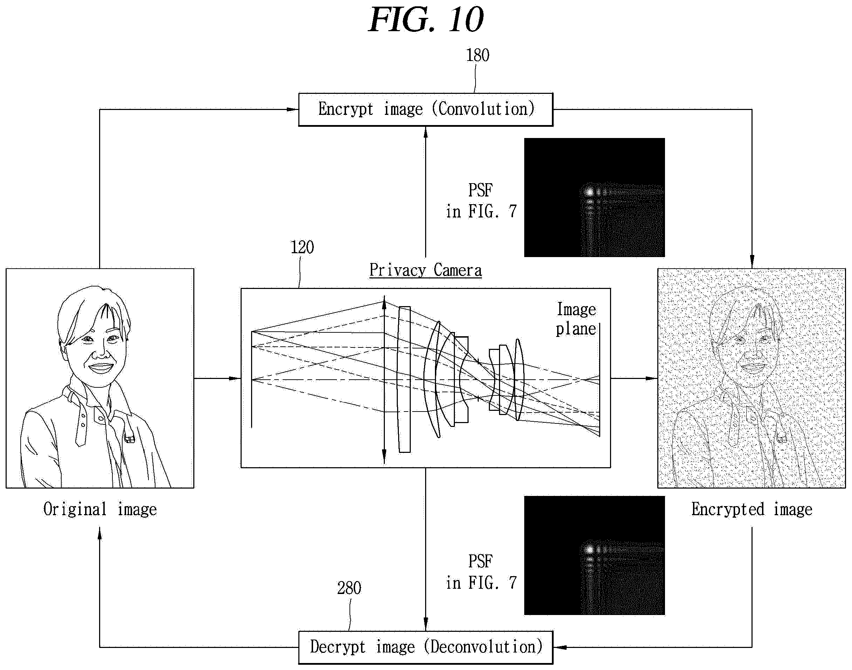

Image optical encryption and decryption methods according to the present disclosure, as described above, may be performed through a change in the structure of the camera module. In association with this, FIG. 10 is a conceptual diagram illustrating the change in the structure of the camera module according to the present disclosure and PSF-based image encryption and decryption processes.

With reference to FIG. 10, an original image may be changed to an encrypted image through the camera module 120.

The encrypted image may be acquired through encryption that is based on the point spread function (PSF). With reference to FIG. 10, the PSF-based encryption process may be performed by applying the point spread function (PSF) and performing the convolution computation. This imitates a process of image capture by a camera. In association with this, the point spread function (PSF), as shown in FIG. 7, may be configured to have a constant PSF pattern at the defocused position and within the field region.

The encrypted image may be restored to an original image on the basis of the PSF, that is, the encryption key. In association with this, the point spread function (PSF) may apply to the encrypted image, and the deconvolution computation may be performed on the encrypted image.

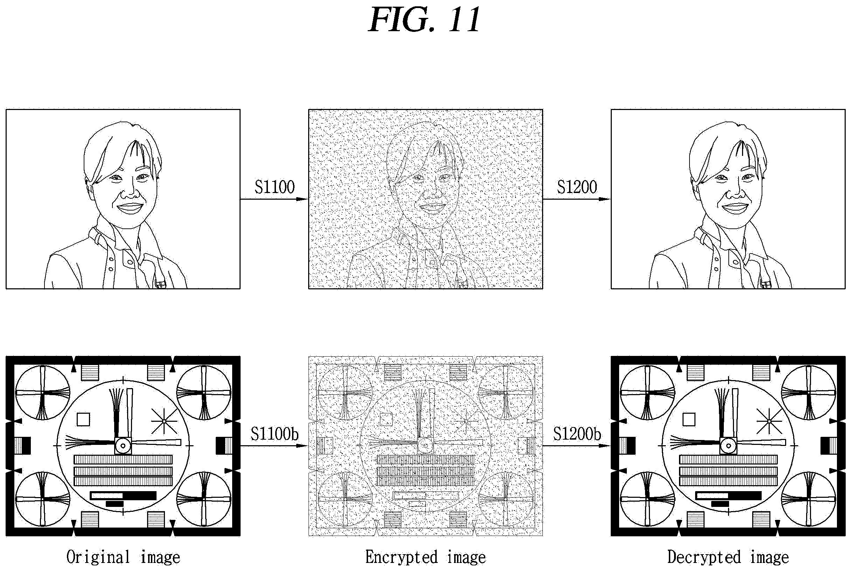

The image optical encryption and decryption methods according to the present disclosure may also apply to an image that does include a person, in addition to an image that includes a person. In association with this, FIG. 11 is a conceptual diagram illustrating the image optical encryption and decryption methods according to the present disclosure that apply to an image that does not include a person, in addition to an image that includes a person.

With reference to FIG. 11, in a case where an image includes a person, the PSF-based image encryption may be performed through an encryption process S1100, in such a manner that such a person cannot be recognized as a specific person. An image, encrypted through a decryption process S1200 in such a manner that a person cannot be recognized as a specific person, may be restored to an original image on the basis of the PSF, that is, the encryption key in such a manner that a person cannot be recognized as a specific person.

With reference to FIG. 11, even in a case where an image does not include a person, the PSF-based image encryption may be performed through an encryption process S1100b in such a manner that an object within the image cannot be recognized. An image, encrypted through a decryption process S1200b in such a manner that a specific object cannot be recognized, may be restored to an original image in a recognizable manner on the basis of the PSF, that is, the encryption key.

The configuration and the operation of the electronic device according to the present disclosure, which encrypts image information, are described above. A configuration and an operation of the electronic device according to the present disclosure, which decrypts encrypted image information, are described below. In association with this, as described above, the electronic device 100 and the second electronic device 200 may also bidirectionally transmit an encrypted image. Therefore, the electronic device 100 may transmit the encrypted image to the second electronic device 200 and may receive and decrypt another encrypted image from the second electronic device 200. In addition, the second electronic device 200 may transmit the encrypted image to the electronic device 100 and may receive and encrypt another encrypted image from the electronic device 100.

With reference to FIG. 3, the electronic device 200 may be configured to include a communication unit 210, a display 251, a memory 270, and a processor 280. In addition, the electronic device 200 may further include a camera module 220 corresponding to an input interface, and may also encrypt an image captured through the camera module 220.

The communication unit 210 may be configured to receive an encryptedly captured from the electronic device 100 that is a transmission device. The processor 280 may be operatively coupled to the communication unit 210. The processor 280 may be configured to restore the encrypted image to a normal image on the basis of the encryption key.

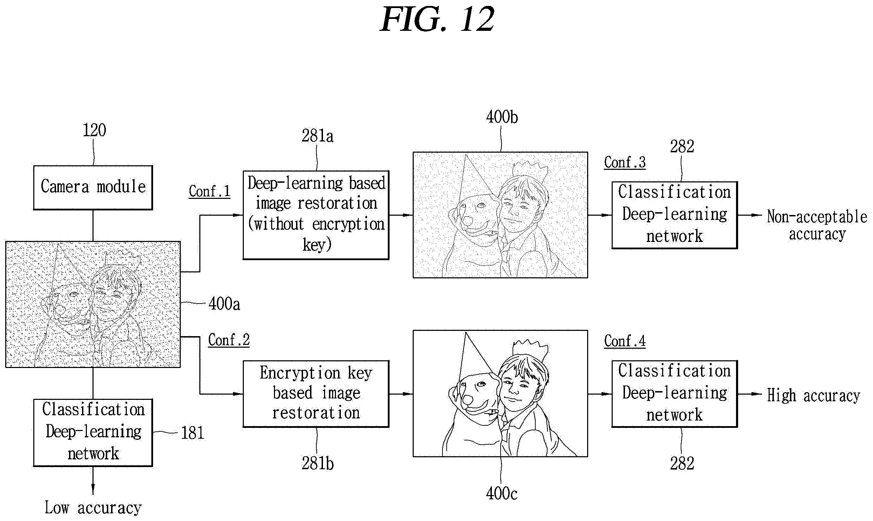

The processor 280 may be configured to make a person identifiable within an image encrypted in an unidentifiable manner, using a deep learning network before restoring the encrypted image to a normal image. In association with this, FIG. 12 is a diagram illustrating a system according to the present disclosure, which includes a deep learning network configured to make an encrypted image identifiable.

FIG. 12 illustrates an example of multi-class classification by AI, which is among encrypted-image applications. The application of classification 281a and classification 282 to a low-quality image without the use of the encryption key may result in low performance. The restoration to a high-quality image on the basis of the encryption key and the application of classification 281b and classification 282 may result in high performance.

In association with this, the restoration of the encrypted image is not easy without the encryption key. Although the encrypted image is used in another application, the high-performance result cannot be expected without the encryption key. Therefore, in a case where a device that encrypts an image transmits the encrypted image, a reception device that receives the encrypted image needs to have the encryption key. A high-performance image that results from using the encryption key may also be provided only in a case where a normal image for video chatting, remote monitoring, or the like is necessary. In association with this, image restoration may also be performed only within a program in an AI execution process, without outputting a normal image resulting from the restoration according to the encryption key.

With reference to FIG. 12, in order to improve a recognition rate of the encrypted image, an existing classification deep learning network structure may be redesigned, thereby optimizing an improvement in performance. In association with this, a configuration may be employed in which an image restoration deep learning algorithm is additionally developed and then object classification is performed after image restoration. A recognition ratio of an image resulting from restoration according to this first configuration may be lower than a recognition ratio of an image resulting from decryption using an encryption key according to a second configuration. In association with this, the recognition ratio of the image resulting from the restoration according to the first configuration is at a level of non-acceptable accuracy. As an example, the recognition ratio thereof may be 96%, but is not limited thereto. In contrast, the recognition ratio of the image resulting from the restoration according to the second configuration is at a level of high accuracy. As an example, the recognition ratio thereof may be 99.4%, but is not limited thereto.

In association with the first configuration, object classification of the image encrypted through the camera module 120 is possible by performing deep learning through a deep learning network 282. The deep learning network 282 performs deep learning that uses the encrypted image as it is, without performing preprocessing for the restoration of the encrypted image. In association with this, the deep learning network may be configured as a software module, and thus may also be referred to as a deep learning module.

As an example, object classification and detection are possible with low accuracy through the deep learning network 282, without performing a process of restoring the encrypted image on the basis of the encryption key. As an example, the object classification and the detection are possible at an accuracy level of approximately 85.4% through the deep learning network 282, without performing the process of restoring the encrypted image on the basis of the encryption key. In association with this, the deep learning network 282 may also be installed on the electronic device 100 in addition to the second electronic device 200.

It is possible that the image encrypted through the camera module 120 is restored through the first configuration according to a first method or the second configuration according to a second method.

With reference to FIGS. 1 to 12, according to the first configuration, the processor 280 of the electronic device may restore a first image 400a, which is an encrypted image, to a specific image 400b, through a first deep learning network 281a without the encryption key. Subsequently, the processor 280 may perform an object classification function through a second deep learning network 282. According to a third configuration in which both the first deep learning module 281a and the second deep learning network 282 apply, the object classification and the detection are possible at a level of non-acceptable accuracy (for example, 96.0%). A decryption module 281b differs from the first deep learning network 281a in that the decryption module 281b performs image restoration using the encryption key. Therefore, the decryption module 281b may also be referred to as an encryption key-based decryption module 281b.

According to the second configuration, the processor 280 may restore the first image 400a, which is an encrypted image, to a second image 400c through the decryption module 281b on the basis of the encryption key. In association with this, the processor 280 may restore the encrypted image to a normal image 400c using the encryption image. The decryption module 281b may restore the encrypted image to the normal image 400c through the encryption key.

The processor 280 may perform the object classification function through the second deep learning network 282. Accordingly, the object classification and the detection are possible at a level of high accuracy (for example, approximately 99.4%) according to a fourth configuration in which both the decryption module 281b and the second deep learning network 282 apply. Through the decryption module 281b, the processor 280 may restore the encrypted image in such a manner that a person within the encrypted image is identifiable. An optimal solution may be to perform complete image restoration by software using the encryption key and to apply deep learning. As described above, the processor 280 may improve an AI recognition rate of the normal image, resulting from the restoration on the basis of the encryption key, much more than an AI recognition of the image, resulting from the restoration through the first deep learning network 281a.

As another example, the processor 280 may also execute a subsequent procedure after restoring the first image 400a to the specific image 400b through the first deep learning network 281a without using the encryption key.

A process of restoring the image encrypted on the basis of the encryption key is described as follows. The processor 280 may Fourier-transform the encrypted image and the PSF in order to perform deconvolution computation for decrypting on the basis of the encryption key. The processor 280 may perform computation to divide the encrypted image by the PSF in the frequency domain and then may perform the inverse Fourier transform on the result of the division, thereby obtaining a normal image. The processor 280 may control the normal image resulting from the restoration to be displayed on the screen of the display.

In a case where the encryption key is updated, the processor 280 may receive the updated encryption key from the transmitting electronic device 100 and may perform an encryption operation. In association with this, when the encryption key is determined to be updated, the processor 280 may perform deconvolution computation on the encrypted image on the basis of the point spread function (PSF) received from the transmitting electronic device 100 and may restore the encrypted image to a normal image. Therefore, the processor 280 may control the normal image resulting from the restoration to be displayed on the screen of the display.

An image decryption process that uses a deep learning network with various configurations is described as follows. Through the second deep learning network 282, the processor 280 may perform a function, such as the object classification, on the specific image 400b, resulting from the restoration of the encrypted image 400a through the deep learning network 281a in such a manner that a person within the encrypted image 400a is identifiable. As an example, the recognition rate can be improved to 96.0% by the second deep learning network 282.

As another example, through the second deep learning network 282, the processor 280 may perform a function, such the object classification, on the normal image 400c, resulting from the restoration on the basis of the encryption key. As an example, the recognition ratio can be improved to 99.4% by the encryption key-based image decryption and the second deep learning network 282.

In summary, when an electronic device is authenticated on the basis of an identifier of the electronic device, the processor 280 may restore the encrypted image through the deep learning network 281a in such a manner that a person within the encrypted image is identifiable. The processor 280 may display the image resulting from the restoration on the screen of the display 251. The processor 280 may perform an AI function, associated with classification of a person within the image resulting from the restoration, facial recognition, and situational recognition.

In addition, when an electronic device is authenticated on the basis of an identifier of the electronic device, through the deep learning network 282, the processor 280 may perform an AI function, which is associated with classification of a person within an image, facial recognition, and situational recognition, on the normal image resulting from the restoration on the basis of the encryption key. When necessary, the processor 280 may display the normal image on the screen of the display 251.

The deep learning network with these various configurations may be implemented in various ways on an electronic device authenticated based on the identifier of the electronic device. When an electronic device is authenticated on the basis of an identifier of the electronic device, the processor 280 is capable of performing object recognition through the first configuration according to the first method. Therefore, through the second deep learning network 282, the processor 280 may restore the first image, resulting from the restoration of the encrypted image in such a manner that a person within the encrypted image is identifiable, to a third image having an improved recognition ratio. The processor 280 may display the third image 400b, resulting from the restoration by the first deep learning network 281a, on the screen of the display.

When an electronic device is authenticated on the basis of an identifier of the electronic device and the match with the encryption key is verified, the processor 280 is capable of performing the object recognition through the second configuration according to the second method. Therefore, using the normal image 400c resulting from the restoration on the basis of the encryption key, the processor 280 may deliver AI performance that achieves a recognition ratio improved much more than a recognition ratio of the third image 400b resulting from the restoration through the first deep learning network 281a.

The electronic device according to the present disclosure that encrypts an image may also restore and transmit an encrypted image in a state of being connected to another authenticated electronic device. In association with this, with reference to FIGS. 1 to 12, the electronic according to the present disclosure, which transmits image information, is described.

The electronic device 100 may be configured to include the communication unit 110, the camera module 120, and the processor 180. The camera module 120 may be configured to capture an image. The camera module 120 may include the optical element 125 inside the camera module 120. The optical element 125 is designed to capture the image as an encrypted image.

The processor 180 may be operatively coupled to the camera module 120. The processor 180 may control the encrypted image to be restored. The processor 180 may control the encrypted image to be restored in a state where authentication is completed. In association with this, the image encrypted in an identifiable manner on the basis of the encryption key is an image that is changed in a manner that is impossible to recognize with the naked eye. In addition, the image resulting from the restoration of the encrypted image is a normal image.

The processor 180 may restore the image, encrypted in an unidentifiable manner, to a normal image on the basis of the encryption key, in a state of being coupled to another authenticated electronic device, for example, the second electronic device 200. In association with this, the electronic device, which includes the camera module 120 capable of performing image encryption, may execute an application such as video chatting. The electronic device may independently perform restoration to a normal image and may also transmit the normal image to another electronic device. For example, while holding a video meeting with another electronic device through a video meeting program, an electronic device, such as a laptop computer, in which an encryption camera is installed, may independently perform restoration to a normal image and may transmit the normal image to the other electronic device. The processor 180 may be configured to transmit the normal image resulting from the restoration to the other electronic device.

The deep learning network and the decryption module 281b may be combined according to the second configuration in FIG. 2. In association with this, the processor 180 may restore the encrypted image to a normal image using the combination of the decryption module 281b and the deep learning network, and then may perform an AI function on the normal image. The processor 180 may be configured to restore the encrypted image to a normal image using the encryption key and to enable identification of a person within the encrypted image. The processor 180 may perform a function, such as the object classification, using the image resulting from the restoration through the deep learning network 282.

The electronic device and the image transmission and reception system according to the present disclosure, which decrypt, transmit, or receive the encrypted image, are described above. Technical effects of the electronic device and the image transmission and reception system according to the present disclosure, which decrypt, transmit, or receive an encrypted image are described as follows.

According to the present disclosure, there can be provided an electronic device and an image transmission and reception system, which transmit or receive an encrypted image, resulting from encryption of an original image by a transmitting electronic device.

According to the present disclosure, the transmitting electronic device can encrypt the original image. Thus, the risk of hacking the original image containing personal information can be prevented at the terminal level.

According to the present disclosure, the risk of privacy data leakage can be prevented while data associated with personal information is processed for training through a deep learning model in a shared environment.

According to the present disclosure, the transmitting electronic device can encrypt an original image, thereby rendering the image unidentifiable and preventing an IoT device from being hacked.

According to the present disclosure, an image captured by an IoT camera, such as a smart home camera, can be changed in a manner that cannot be identified when hacked or utilized as Big Data for AI learning data.

According to the present disclosure, an image that is optically processed in an unidentifiable manner at the camera level can be output, thereby fundamentally protecting privacy.

According to the present disclosure, not only the risks, such as hacking, but also the causes of breaches of sensitive privacy, which may occur during a data transmission process and a storage process, can be fundamentally eliminated by performing a subsequent deep learning process using optical encryption and an encrypted image.

According to the present disclosure, because a mathematical encryption key for an optically encrypted image is provided, it is also possible that the optically encrypted image is output as an original image, resulting from the decryption, in the transmission device and the reception device when necessary.

Further scope of applicability of the present disclosure will become apparent from the foregoing detailed description. It should be understood, however, that the detailed description and specific examples, such as the preferred embodiment of the invention, are given by way of illustration only, since various changes and modifications within the idea and scope of the invention will be apparent to those skilled in the art.

In relation to the aforementioned present disclosure, design and operations of a plurality of antennas of an antenna system mounted in a vehicle and a configuration performing the control of those antennas can be implemented as computer-readable codes in a program-recorded medium. The computer-readable media may include all kinds of recording apparatuses in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). The computer may include the controller of the terminal. Therefore, it should also be understood that the above-described implementations are not limited by any of the details of the foregoing description, unless otherwise specified, but rather should be construed broadly within its scope as defined in the appended claims. The scope of the invention should be determined by reasonable interpretation of the appended claims.

**Claims**

1. An electronic device (100) that encrypts and restores image information, the electronic device (100) comprising:

   a camera module (120) configured to capture an image and including an optical element (125) inside the camera module, the optical element (125) being designed to capture the image as an encrypted image;
   a processor (180) configured to restore the image, captured in a way that is encrypted in an unidentifiable manner, to a decrypted image on the basis of an encryption key usable for decryption; and
   a display (151) operatively coupled to the camera module (120) and configured to display the decrypted image,
   **characterized in that** when the electronic device (100) is authenticated on the basis of an identifier of the electronic device (100), through a deep learning network (281), the processor (180) performs an artificial intelligence, AI, function, which is associated with classification of a person within an image, facial recognition, and situational recognition, on the decrypted image resulting from the restoration on the basis of the encryption key.

2. The electronic device of claim 1, further comprising:

   wherein the camera module (120) is configured to include a plurality of lenses (121, 122, 123), and the optical element (125) is arranged, together with the plurality of lenses (121, 122, 123) and is configured to encrypt the captured image in such a manner that the captured image is unidentifiable, and
   wherein the processor (180) decodes the image encrypted in an unidentifiable manner by the optical element (125), or additionally re-encrypts the image encrypted in an unidentifiable manner by the optical element (125) using software.

3. The electronic device of claim 1, wherein the processor (180) controls the encrypted image to be stored in a cloud server (300), and, when necessary, accesses the cloud server (300) and restores the encrypted image to the decrypted image.

4. The electronic device of claim 1, wherein the processor (180) transmits the encrypted image to another electronic device (200).

5. The electronic device of any one of claims 1 to 4, the electronic device further comprising:
   a communication unit (110) configured to receive the image, captured in a way that is encrypted in an unidentifiable manner, from a transmission device.

6. The electronic device of any one of claims 1 to 5, wherein the processor (180) restores the encrypted image to the decrypted image using a combination of a decryption module (281b) and the deep learning network (281), and then performs the AI function on the decrypted image.

7. The electronic device of claim 6, wherein the processor (180) Fourier-transforms the encrypted image and a point spread function, PSF, in order to perform deconvolution computation for decryption on the basis of the encryption key, performs computation to divide the encrypted image by the PSF in a frequency domain, and then obtains the decrypted image by performing inverse Fourier transform on the result of the division.

8. The electronic device of claim 7, wherein the processor (180) restores the encrypted image to the decrypted image by performing the deconvolution computation and controls the decrypted image resulting from the restoration to be displayed on a screen of the display.

9. The electronic device of claim 8, wherein the processor (180) restores the encrypted image to the decrypted image using the combination of the decryption module (281b) and the deep learning network (281), and then performs the AI function on the decrypted image.

10. The electronic device of claim 9, wherein the processor (180) improves an AI recognition rate of the decrypted image, resulting from the restoration on the basis of the encryption key, much more than an AI recognition of an image, resulting from restoration through a first deep learning network (281a).

11. The electronic device of claim 8, wherein when the electronic device (100) is authenticated on the basis of an identifier of the electronic device (100), the processor (180) restores the encrypted image through the deep learning network (281) in such a manner that a person within the encrypted image is identifiable, enables the image resulting from the restoration to be displayed on the screen of the display, and performs the AI function, which is associated with classification of a person within the decrypted image resulting from the restoration, facial recognition, and situational recognition.

12. The electronic device (100) of any one of claims 1 to 11,

   wherein in a state of being connected to another authenticated electronic device, the processor (180) is configured to restore the image encrypted in an unidentifiable manner to the decrypted image on the basis of the encryption key and to transmit the decrypted image resulting from the restoration to the other authenticated electronic device.

13. The electronic device of claim 12, wherein the processor (180) restores the encrypted image to the decrypted image using a combination of encryption key and deep learning network (281) and performs the AI function on the decrypted image, and

   wherein the processor (180) restores the encrypted image to a second image that has an improved recognition rate, within the processor (180), through the decryption module (281b), and then, the second image resulting from the restoration is configured using a second deep learning network (282) in order to realize classification of a person within an image, facial recognition, and situational recognition using AI.

**Patentansprüche**

1. Elektronische Vorrichtung (100), die Bildinformationen verschlüsselt und wiederherstellt, wobei die elektronische Vorrichtung (100) umfasst:

   ein Kameramodul (120), das dazu konfiguriert ist, ein Bild aufzunehmen, und das ein optisches Element (125) innerhalb des Kameramoduls umfasst, wobei das optische Element (125) dazu ausgelegt ist, das Bild als verschlüsseltes Bild aufzunehmen;
   einen Prozessor (180), der dazu konfiguriert ist, das in einer auf nicht identifizierbare Weise verschlüsselten Art aufgenommene Bild auf Grundlage eines zur Entschlüsselung verwendbaren Verschlüsselungsschlüssels zu einem entschlüsselten Bild wiederherzustellen; und
   eine Anzeige (151), die mit dem Kameramodul (120) wirkgekoppelt und dazu konfiguriert ist, das entschlüsselte Bild anzuzeigen,
**dadurch gekennzeichnet, dass**, wenn die elektronische Vorrichtung (100) auf Grundlage einer Kennung der elektronischen Vorrichtung (100) durch ein Deep-Learning-Netzwerk (281) authentifiziert wird, der Prozessor (180) eine Funktion der künstlichen Intelligenz, KI, die mit einer Klassifizierung einer Person innerhalb eines Bildes, Gesichtserkennung und Situationserkennung verknüpft ist, an dem entschlüsselten Bild durchführt, das aus der Wiederherstellung auf Grundlage des Verschlüsselungsschlüssels resultiert.

2. Elektronische Vorrichtung nach Anspruch 1, ferner umfassend:

   wobei das Kameramodul (120) dazu konfiguriert ist, eine Vielzahl von Linsen (121, 122, 123) zu umfassen, und das optische Element (125) zusammen mit der Vielzahl von Linsen (121, 122, 123) angeordnet ist und dazu konfiguriert ist, das aufgenommene Bild derart zu verschlüsseln, dass das aufgenommene Bild nicht identifizierbar ist, und
   wobei der Prozessor (180) das durch das optische Element (125) auf nicht identifizierbare Weise verschlüsselte Bild dekodiert oder das durch das optische Element (125) auf nicht identifizierbare Weise verschlüsselte Bild zusätzlich unter Verwendung von Software erneut verschlüsselt.

3. Elektronische Vorrichtung nach Anspruch 1, wobei der Prozessor (180) steuert, dass das verschlüsselte Bild in einem Cloud-Server (300) gespeichert wird, und, falls erforderlich, auf den Cloud-Server (300) zugreift und das verschlüsselte Bild zu dem entschlüsselten Bild wiederherstellt.

4. Elektronische Vorrichtung nach Anspruch 1, wobei der Prozessor (180) das verschlüsselte Bild an eine andere elektronische Vorrichtung (200) überträgt.

5. Elektronische Vorrichtung nach einem der Ansprüche 1 bis 4, wobei die elektronische Vorrichtung ferner umfasst:
   eine Kommunikationseinheit (110), die dazu konfiguriert ist, das in einer auf nicht identifizierbare Weise verschlüsselten Art aufgenommene Bild von einer Übertragungsvorrichtung zu empfangen.

6. Elektronische Vorrichtung nach einem der Ansprüche 1 bis 5, wobei der Prozessor (180) das verschlüsselte Bild unter Verwendung einer Kombination aus einem Entschlüsselungsmodul (281b) und dem Deep-Learning-Netzwerk (281) zu dem entschlüsselten Bild wiederherstellt und anschließend die KI-Funktion an dem entschlüsselten Bild durchführt.

7. Elektronische Vorrichtung nach Anspruch 6, wobei der Prozessor (180) das verschlüsselte Bild und eine Punktspreizfunktion, PSF, Fourier-transformiert, um eine Entfaltungsberechnung zur Entschlüsselung auf Grundlage des Verschlüsselungsschlüssels durchzuführen, eine Berechnung durchführt, um das verschlüsselte Bild in einem Frequenzbereich durch die PSF zu teilen, und anschließend das entschlüsselte Bild durch Durchführen einer inversen FourierTransformation an dem Ergebnis der Division erhält.

8. Elektronische Vorrichtung nach Anspruch 7, wobei der Prozessor (180) das verschlüsselte Bild durch Durchführen der Entfaltungsberechnung zu dem entschlüsselten Bild wiederherstellt und steuert, dass das aus der Wiederherstellung resultierende entschlüsselte Bild auf einem Bildschirm der Anzeige angezeigt wird.

9. Elektronische Vorrichtung nach Anspruch 8, wobei der Prozessor (180) das verschlüsselte Bild unter Verwendung der Kombination aus dem Entschlüsselungsmodul (281b) und dem Deep-Learning-Netzwerk (281) zu dem entschlüsselten Bild wiederherstellt und anschließend die KI-Funktion an dem entschlüsselten Bild durchführt.

10. Elektronische Vorrichtung nach Anspruch 9, wobei der Prozessor (180) eine KI-Erkennungsrate des entschlüsselten Bildes, das aus der Wiederherstellung auf Grundlage des Verschlüsselungsschlüssels resultiert, wesentlich stärker verbessert als eine KI-Erkennung eines Bildes, das aus einer Wiederherstellung durch ein erstes Deep-Learning-Netzwerk (281a) resultiert.

11. Elektronische Vorrichtung nach Anspruch 8, wobei, wenn die elektronische Vorrichtung (100) auf Grundlage einer Kennung der elektronischen Vorrichtung (100) authentifiziert wird, der Prozessor (180) das verschlüsselte Bild durch das Deep-Learning-Netzwerk (281) derart wiederherstellt, dass eine Person innerhalb des verschlüsselten Bildes identifizierbar ist, ermöglicht, dass das aus der Wiederherstellung resultierende Bild auf dem Bildschirm der Anzeige angezeigt wird, und die KI-Funktion durchführt, die mit der Klassifizierung einer Person innerhalb des aus der Wiederherstellung resultierenden entschlüsselten Bildes, Gesichtserkennung und Situationserkennung verknüpft ist.

12. Elektronische Vorrichtung (100) nach einem der Ansprüche 1 bis 11, wobei der Prozessor (180) in einem Zustand, in dem er mit einer anderen authentifizierten elektronischen Vorrichtung verbunden ist, dazu konfiguriert ist, das auf nicht identifizierbare Weise verschlüsselte Bild auf Grundlage des Verschlüsselungsschlüssels zu dem entschlüsselten Bild wiederherzustellen und das aus der Wiederherstellung resultierende entschlüsselte Bild an die andere authentifizierte elektronische Vorrichtung zu übertragen.

13. Elektronische Vorrichtung nach Anspruch 12, wobei der Prozessor (180) das verschlüsselte Bild unter Verwendung einer Kombination aus Verschlüsselungsschlüssel und Deep-Learning-Netzwerk (281) zu dem entschlüsselten Bild wiederherstellt und die KI-Funktion an dem entschlüsselten Bild durchführt, und

wobei der Prozessor (180) das verschlüsselte Bild innerhalb des Prozessors (180) durch das Entschlüsselungsmodul (281b) zu einem zweiten Bild wiederherstellt, das eine verbesserte Erkennungsrate aufweist, und anschließend das aus der Wiederherstellung resultierende zweite Bild unter Verwendung eines zweiten Deep-Learning-Netzwerks (282) konfiguriert wird, um die Klassifizierung einer Person innerhalb eines Bildes, Gesichtserkennung und Situationserkennung unter Verwendung von KI zu realisieren.

**Revendications**

1. Dispositif électronique (100) qui chiffre et restaure des informations d'image, le dispositif électronique (100) comprenant :

   un module de caméra (120) configuré pour capturer une image et comprenant un élément optique (125) à l'intérieur du module de caméra, l'élément optique (125) étant conçu pour capturer l'image sous forme d'image chiffrée ;
   un processeur (180) configuré pour restaurer l'image, capturée d'une manière chiffrée de façon non identifiable, en une image déchiffrée sur la base d'une clé de chiffrement utilisable pour le déchiffrement ; et
   un affichage (151) couplé de manière opérationnelle au module de caméra (120) et configuré pour afficher l'image déchiffrée,
   **caractérisé en ce que**, lorsque le dispositif électronique (100) est authentifié sur la base d'un identifiant du dispositif électronique (100), par l'intermédiaire d'un réseau d'apprentissage profond (281), le processeur (180) exécute une fonction d'intelligence artificielle, IA, qui est associée à la classification d'une personne dans une image, à la reconnaissance faciale et à la reconnaissance situationnelle, sur l'image déchiffrée résultant de la restauration sur la base de la clé de chiffrement.

2. Dispositif électronique selon la revendication 1, comprenant en outre :

dans lequel le module de caméra (120) est configuré pour comprendre une pluralité de lentilles (121, 122, 123), et l'élément optique (125) est agencé, conjointement avec la pluralité de lentilles (121, 122, 123), et est configuré pour chiffrer l'image capturée de telle manière que l'image capturée soit non identifiable, et dans lequel le processeur (180) décode l'image chiffrée de façon non identifiable par l'élément optique (125), ou rechiffre en outre l'image chiffrée de façon non identifiable par l'élément optique (125) à l'aide d'un logiciel.

3. Dispositif électronique selon la revendication 1, dans lequel le processeur (180) commande que l'image chiffrée soit stockée dans un serveur cloud (300), et, si nécessaire, accède au serveur cloud (300) et restaure l'image chiffrée en l'image déchiffrée.

4. Dispositif électronique selon la revendication 1, dans lequel le processeur (180) transmet l'image chiffrée à un autre dispositif électronique (200).

5. Dispositif électronique selon l'une quelconque des revendications 1 à 4, le dispositif électronique comprenant en outre :
une unité de communication (110) configurée pour recevoir l'image, capturée d'une manière chiffrée de façon non identifiable, depuis un dispositif de transmission.

6. Dispositif électronique selon l'une quelconque des revendications 1 à 5, dans lequel le processeur (180) restaure l'image chiffrée en l'image déchiffrée en utilisant une combinaison d'un module de déchiffrement (281b) et du réseau d'apprentissage profond (281), puis exécute la fonction IA sur l'image déchiffrée.

7. Dispositif électronique selon la revendication 6, dans lequel le processeur (180) transforme par Fourier l'image chiffrée et une fonction d'étalement du point, PSF, afin d'effectuer un calcul de déconvolution pour le déchiffrement sur la base de la clé de chiffrement, effectue un calcul pour diviser l'image chiffrée par la PSF dans un domaine fréquentiel, puis obtient l'image déchiffrée en effectuant une transformée de Fourier inverse sur le résultat de la division.

8. Dispositif électronique selon la revendication 7, dans lequel le processeur (180) restaure l'image chiffrée en l'image déchiffrée en effectuant le calcul de déconvolution et commande que l'image déchiffrée résultant de la restauration soit affichée sur un écran de l'affichage.

9. Dispositif électronique selon la revendication 8, dans lequel le processeur (180) restaure l'image chiffrée en l'image déchiffrée en utilisant la combinaison du module de déchiffrement (281b) et du réseau d'apprentissage profond (281), puis exécute la fonction IA sur l'image déchiffrée.

10. Dispositif électronique selon la revendication 9, dans lequel le processeur (180) améliore un taux de reconnaissance IA de l'image déchiffrée, résultant de la restauration sur la base de la clé de chiffrement, beaucoup plus qu'une reconnaissance IA d'une image résultant d'une restauration par l'intermédiaire d'un premier réseau d'apprentissage profond (281a).

11. Dispositif électronique selon la revendication 8, dans lequel, lorsque le dispositif électronique (100) est authentifié sur la base d'un identifiant du dispositif électronique (100), le processeur (180) restaure l'image chiffrée par l'intermédiaire du réseau d'apprentissage profond (281) de telle manière qu'une personne dans l'image chiffrée soit identifiable, permet que l'image résultant de la restauration soit affichée sur l'écran de l'affichage, et exécute la fonction IA, qui est associée à la classification d'une personne dans l'image déchiffrée résultant de la restauration, à la reconnaissance faciale et à la reconnaissance situationnelle.

12. Dispositif électronique (100) selon l'une quelconque des revendications 1 à 11,
dans lequel, dans un état de connexion à un autre dispositif électronique authentifié, le processeur (180) est configuré pour restaurer l'image chiffrée de façon non identifiable en l'image déchiffrée sur la base de la clé de chiffrement et pour transmettre l'image déchiffrée résultant de la restauration à l'autre dispositif électronique authentifié.

13. Dispositif électronique selon la revendication 12, dans lequel le processeur (180) restaure l'image chiffrée en l'image déchiffrée en utilisant une combinaison de clé de chiffrement et de réseau d'apprentissage profond (281) et exécute la fonction IA sur l'image déchiffrée, et
dans lequel le processeur (180) restaure l'image chiffrée en une seconde image qui présente un taux de reconnaissance amélioré, au sein du processeur (180), par l'intermédiaire du module de déchiffrement (281b), puis la seconde image résultant de la restauration est configurée en utilisant un second réseau d'apprentissage profond (282) afin de réaliser la classification d'une personne dans une image, la reconnaissance faciale et la reconnaissance situa-

ationnelle à l'aide de l'IA.

# FIG. 1

ELECTRONIC DEVICE 100

INPUT INTERFACE (CAMERA MODULE) 120

MEMORY 170

APPLICATION PROGRAM 174
APPLICATION PROGRAMMING INTERFACE (API) 173
MIDDLEWARE 172
KERNE 171

170

PROCESSOR 180

OUTPUT INTERFACE 150

DISPLAY 151

COMMUNICATION INTERFACE 110

BASE STATION

MEC 330

EXTERNAL DEVICE 100a

SECOND SERVER 320

FIRST SERVER 310

300

EP 4 462 768 B1

# FIG. 2

STORING IN CLOUD AND PERFORMING AI FUNCTION

COMPLETE RESTORATION OF ENCRYPTED IMAGE TO NORMAL IMAGE BY PERFORMING DECRYPTION IN SOFTWARE ONLY WHENEVER NECESSARY — 280

Normal image

# FIG. 3

# FIG. 4

124  121 122 123

120

125

180

280

Decrypt the
encrypted image
using encrypted
key

Encrypted image

Original image

# FIG. 5

```
        ( START )—S
            │
            ▼
┌──────────────────────┐
│   OPTICAL DESIGN     │——S100
└──────────────────────┘
            │
            ▼
┌──────────────────────┐
│   PSF COMPUTATION    │——S200
└──────────────────────┘
            │
            ▼
┌──────────────────────┐
│   MTF COMPUTATION    │——S300
└──────────────────────┘
            │
            ▼              S400
          ╱    EXTENT      ╲
   NO  ╱  OF ENCRYPTION >   ╲
  ◄───◄      THRESHOLD       ►
       ╲       LEVEL        ╱
          ╲              ╱
            │ YES
            ▼
        ( END )—E
```

# FIG. 6

START —S

ENCRYPTED IMAGE          PSF (ENCRYPTION KEY) — S100b

PERFORM FOURIER TRANSFORM — S200b

PERFORM DECONVOLUTION COMPUTATION IN FREQUENCY DOMAIN — S300b

PERFORM INVERSE FOURIER TRANSFORM — S400b

DISPLAY NORMAL IMAGE — S500b

END —E

FIG. 7

# FIG. 8

# FIG. 9A

# FIG. 9B

# FIG. 10

Encrypt image (Convolution) — 180

PSF in FIG. 7

120 — Privacy Camera

Image plane

Original image

Encrypted image

PSF in FIG. 7

280 — Decrypt image (Deconvolution)

FIG. 11

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2021203886 A1

### Non-patent literature cited in the description

- **EVTIKHIEV, NIKOLAY N. et al.** Application of a Digital Micromirror Device for Optical Encryption with Time Integration. *Optoelectronics, Instrumentation and Data Processing*, 2020, vol. 56, 134-139
- **HAZER ; ABDURRAHMAN ; REMZI YILDIRIM.** A review of single and multiple optical image encryption techniques. *Journal of Optics*, 2021, vol. 23
- **CHEREMKHIN, PAVEL A. et al.** Optical encryption of digital data in form of quick response code using spatially incoherent illumination. *Proc. SPIE*, 2016, vol. 10176, 1017619